# EUROPEAN PATENT APPLICATION

(11) **EP 4 707 141 A1**
(43) Date of publication of application: **11.03.2026**
(21) Application number: 25201336.2
(22) Date of filing: 10.09.2025
(51) Int. Cl.: B62J 1/00

(54) **BICYCLE SEAT**

(30) Priority: 10.09.2024 GB 202413277
(71) Applicant: McBride Designs Limited, Waterlooville, Hampshire PO7 8AQ (GB)
(72) Inventor: McBride, Ian Raymond, Waterlooville, PO7 8AQ (GB)
(74) Representative: Stevens Hewlett & Perkins

(57) **Abstract**

This invention relates to a bicycle seat. The bicycle seat has a seat frame (12) and a seat cushion (16), the seat cushion having two seat pads (20) and a gap between the pads, each seat pad comprising a flexible and resilient body which is generally hollow.

## Description

### FIELD OF THE INVENTION

This invention relates to a bicycle seat. The seat of a bicycle is often referred to as a saddle but the term seat will be used throughout this specification.

### BACKGROUND TO THE INVENTION

Many different types of bicycle seat are available. Most bicycle seats comprise a generally rigid seat frame supporting a seat cushion. The seat frame is configured for mounting to the seat post of the frame of the bicycle. The seat frame is typically movably mounted to the seat post so that the position and inclination of the bicycle seat can be adjusted to suit the rider. The seat frame is typically also removably mounted to the seat post so that the bicycle seat can be removed and replaced if required.

The seat cushion provides the surface upon which the rider sits when riding the bicycle. The seat cushion is typically somewhat flexible and resilient, the degree of flexibility varying between seat manufacturers and seat designs. The seat cushion is typically contoured and has rounded edges to increase the comfort of the rider.

One traditional design of bicycle seat has a seat cushion which is substantially equilateral triangular in plan view. The seat cushion directly supports the rider's perineum and parts of the buttocks. Notwithstanding its flexibility, such a seat cushion is usually only comfortable for riding for relatively short periods of time.

Another traditional design of bicycle seat has a seat cushion which is substantially isosceles triangular in plan view. This seat cushion is narrower than the first traditional design described above and provides less support for the buttocks so that more of the rider's weight is supported by the perineum. This type of seat cushion is also typically comfortable for only relatively short periods of time.

Supporting a large proportion of the rider's weight by the perineum is of known concern to many bicycle riders, especially for those who spend long periods of time riding a bicycle. The perineum has many nerves and compressing those nerves can cause short-term and long-term problems. The perineum also has many blood vessels and compressing those blood vessels can also cause short-term and long-term problems.

The short-term problems can be numbness and paresthesia (a tingling sensation), both of which can degenerate into long term problems if the rider does not take preventative actions. A common preventative action is to take frequent rests so that the periods or time for which the nerves and blood vessels are compressed are reduced. The long-term problems can include damage to the prostate gland and perhaps also erectile dysfunction in some male riders.

Bicycle seat manufacturers have sought to use alternative materials for the seat cushion, including for example seat cushions containing gels and foams of varying densities and hardness. However, whilst such alternative materials might provide an immediate improvement in the rider's comfort, they do not necessarily avoid the problems caused by compression of the nerves and blood vessels in the perineum.

Further developments have been made in order to seek specifically to avoid the problems caused by compression of the nerves and blood vessels of the perineum. In particular, bicycle seats have been developed in which the seat cushion does not directly support the user's weight upon the perineum. Known designs of such seat cushions have a similar triangular outline in plan view to the second traditional seat cushion described above but the central region (which would engage the perineum) is lowered or in some designs removed. One such design of bicycle seat is disclosed in US design patent D739153S. Another known design simply comprises two seat pads which are spaced apart whereby each pad can support one of the rider's buttocks. However, whilst these known designs avoid the direct support of the rider's weight upon the perineum, they increase the weight which must be supported by the buttocks and can become uncomfortable relatively quickly.

### SUMMARY OF THE INVENTION

Notwithstanding the developments in bicycle seats described above, the inventor has appreciated that there is a need for a bicycle seat which can avoid the direct support of the user's weight upon the perineum and can also remain comfortable for extended periods of time.

According to the invention therefore there is provided bicycle seat having a seat frame and a seat cushion, the seat cushion having two seat pads and a gap between the pads, each seat pad comprising a flexible and resilient body which is generally hollow.

The provision of a generally hollow body distinguishes the invention from the known seat cushions and seat pads which are filled with foam; notwithstanding that the foam has multiple hollow cells the seat cushions and seat pads are nevertheless filled by a latticework comprising the interconnected walls of the cells.

Preferably, the seat pads each have a substantially flat top wall. Preferably also, the seat pads are separated by a distance enabling them to support the rider's ischial tuberosities, namely the two projections at the base of the pelvis which are often called the "sit bones". Accordingly, the rider's weight can be supported directly by the sit bones upon the respective seat pads. Ideally, the centres of the top walls of the seat pads are separated by a distance close to the separation of the rider's sit bones.

Preferably, the seat pads taper towards the front of the seat whereby the centres of the seat pads are closer together at the front of the seat than at the back of the seat. The inventor has appreciated that the lowest parts of the sit bones are closer together when the rider is leaning forward (caused by the structure of the pelvis); since it is the lowest parts of the sit bones which engage the seat pads, arranging the centres of the seat pads to be closer together at the front of the seat enables the rider's sit bones to remain located at the approximate (longitudinal) centre of the seat pads for a range of riding positions.

Preferably, the body of each seat pad comprises a top wall and a peripheral wall. Desirably, the peripheral wall defines the outline of the seat pad in plan view. Preferably, the top wall and the peripheral wall are integrally formed, and are desirably of the same material.

Desirably, the peripheral wall is less flexible than the top wall when supporting a rider's weight, whereby the top wall will deform to a greater extent than the peripheral wall. The greater deformation of the top wall is primarily due to the orientation of the top wall being substantially perpendicular to the rider's weight in use.

The inventor has therefore appreciated that flexible, resilient and generally hollow seat pads will deform under the rider's weight, the centre of the top wall (which is not directly supported) deforming to a greater extent than the outer edge of the top wall (which is supported by the peripheral wall) to effectively create a well or depression for each of the sit bones. Each of the sit bones therefore engages a part of the top wall which is surrounded by the peripheral wall; as the top wall deforms the sit bone lies within a depression, the size and shape of the depression being directly dependent upon the rider's weight and the separation of the rider's sit bones. The sit bones are thereby well-supported and the seat pads provide a relatively stable location for the sit bones.

The inventor has also appreciated that the sit bones are less likely to move relative to the seat pads when pedalling and manoeuvring the bicycle and this is believed to contribute significantly to the rider's comfort. Simulations which the inventor has conducted show that the rider's centre of gravity moves very little during pedalling whilst sitting upon the present bicycle seat, and in particular moves much less than during pedalling with a known bicycle seat.

The inventor has also appreciated that the sit bones are the most effective skeletal points upon which to support the user's weight whilst riding a bicycle. Firstly, the sit bones are rigid parts of the pelvis and ideally suited to weight-bearing. Secondly, there are few nerves, blood vessels or other delicate structures around the sit bones.

Two generally hollow seat pads which are spaced apart and can directly support the sit bones, minimises or avoids any of the user's weight being supported upon the perineum.

The inventor has identified that generally hollow seat pads which are flexible and resilient can remain comfortable for extended periods of time, primarily because they readily deform to a degree corresponding to the rider's weight. In particular, the deformation of the pads (and in particular the deformation of the top wall and peripheral wall) can increase and decrease as required to support the user's weight as the bicycle encounters bumps (the rider's effective weight increasing and decreasing as the bicycle rises and falls due to the bumps).

In this latter regard, the inventor has identified that the known designs of foam-filled seat generally do not provide long-term comfort. This is believed to be because the cells of the foam become flattened by the rider's weight and the seat cushion does not respond to rapid changes in the rider's effective weight as the bicycle passes over bumps. If, for example, the seat cushion rises rapidly as the bicycle impacts a bump, most if not all of that rapid movement is communicated to the rider with little of the impact being absorbed by the foam.

The benefit of the invention in absorbing rapid movements and the consequential rapid changes in the rider's effective weight, are enhanced by the provision of pads which provide flexible platforms upon which the user's sit bones rest. Alternatively stated, the work the inventor has undertaken shows that generally hollow seat pads with a substantially flat top which can readily deform to accommodate the rider's weight are the most effective in providing long-term comfort for the rider.

Preferably, the top wall of each seat pad is a continuation of the peripheral wall of the seat pad. Alternatively stated, there are preferably no steps, sharp corners or other discontinuities in or between the peripheral wall and the top wall, which discontinuities could provide locations of increased strain and deformation. Instead, it is desired that the deformation of the seat pad caused by a rider's weight is distributed across the top wall and the peripheral wall, with the top wall ideally deforming more than the peripheral wall.

Desirably, the bicycle seat has a frame plate underneath the seat pad. Preferably, the bottom edge of the peripheral wall of the seat pad engages the frame plate and ideally lies upon the frame plate. Desirably, the bottom edge of the peripheral wall is a continuous ring and is preferably adhered or otherwise bonded to the frame plate so that the bottom edge does not move when a rider sits upon the bicycle seat.

Preferably, the frame plate has a hole inside the region bordered by the bottom edge of the peripheral wall. The hole allows air to escape as the seat pad is deformed. The hole may be 10 mm in diameter for example and is therefore large enough that the hole does not throttle or otherwise restrict the passage of air out from or in to the hollow volume underneath the seat pad. Also, the frame plate is preferably substantially rigid. Together these features ensure that the material of the seat pads provide all of the deformation and cushioning required to support the user's weight; the frame plate (and the seat frame in general) does not deform and there is no significant compression of the air inside the hollow volume of the seat pad. The deformation of the seat pad is therefore more controllable and predictable.

Each seat pad preferably comprises an integrated structure with a top wall and a peripheral wall and can if desired be made as a one-piece moulding. Ideally, the wall thickness of the top wall and the peripheral wall are substantially the same.

Desirably, the seat pads are interconnected by parts of the seat cushion which do not support the rider's weight during use.

The seat pads and the interconnecting parts of the seat cushion can all be made as a one-piece mounding. In such structures, parts of the peripheral wall can blend into the interconnecting parts with the result that the local thickness of the peripheral wall can be increased by the interconnecting parts. Nevertheless, the proportion of the peripheral wall of each seat pad which blend into the interconnecting parts is small and the effect upon the overall flexibility of the peripheral wall is likewise small.

The seat pads are ideally made of silicone vulcanised rubber. The interconnecting parts of the seat cushion may also be of silicone vulcanised rubber.

It has been found that seat pads which are manufactured as a single piece of silicone vulcanised rubber with a Shore hardness of 25 and with the top wall and the peripheral wall having a thickness of 15 mm, can provide a bicycle seat which can be used comfortably for extended periods of time by riders weighing between 50kg and 120kg (and clearly by riders within and close to this range of weights). Nevertheless, the wall thickness can be reduced (perhaps by around 1 mm) to make the seat more comfortable for riders at the bottom end of this range, and conversely can be increased (perhaps by around 1 mm) to make the seat more comfortable for riders at the top end of this range.

### BRIEF DESCRIPTION OF THE PREFERRED EMBODIMENTS

The invention will now be described in more detail, by way of example, with reference to the accompanying drawings, in which:
- Fig.1: shows a perspective view of the bicycle seat according to the invention;
- Fig.2: shows a side view of the bicycle seat;
- Fig.3: shows a lateral cross-section of the bicycle seat along the line F-F of Fig.2;
- Fig.4: shows a longitudinal cross-section through one of the seat pads of the bicycle seat; and
- Fig.5: shows a plan view of the bicycle seat.

### DETAILED DESCRIPTION

The bicycle seat 10 shown in the drawings is adapted for mounting to the seat post of the frame of a bicycle (not shown). In known fashion, the bicycle seat 10 has a substantially rigid frame 12 including two bars 14. The size and spacing of the bars 14 is standardised so that the bicycle seat 10 can be mounted to standard cooperating parts of the seat post.

A seat cushion 16 is permanently secured to the rigid frame 12, perhaps by over-moulding. The seat cushion 16 in this embodiment is a one-piece moulding of silicone vulcanised rubber with a Shore hardness of 25.

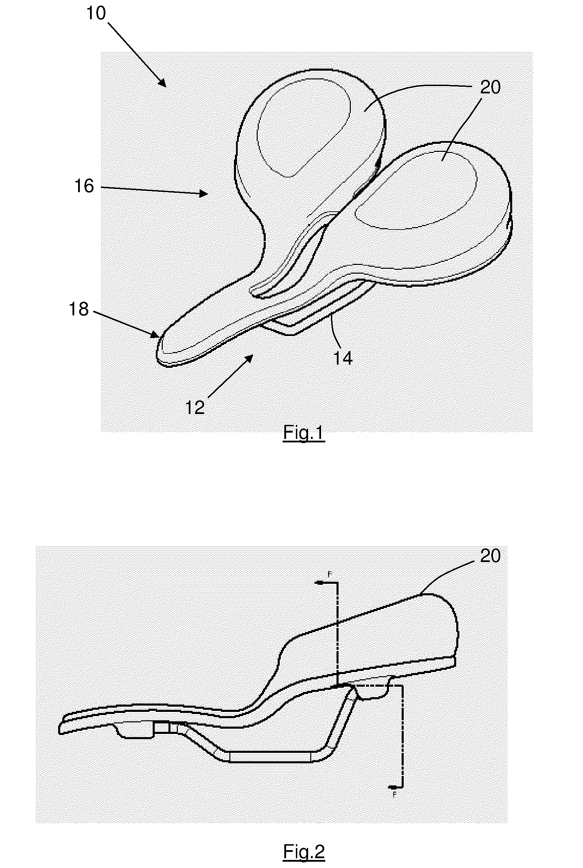

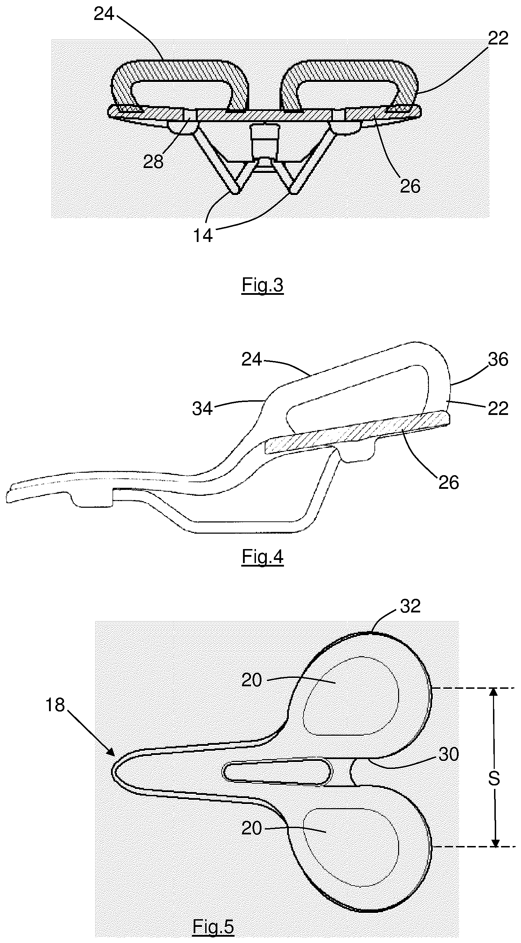

As best seen in Fig.5, in plan view the seat cushion 16 approximates to an isosceles triangular shape. The seat cushion has a nose 18 and two seat pads 20. Figs. 3 and 5 in particular show the gap in the seat cushion 16 between the seat pads 20. Fig.2 shows that the seat cushion 16 towards the nose 18 is also lowered. Accordingly, the bicycle seat 10 is designed so that all (or at least substantially all) of the rider's weight which acts upon the seat cushion 16 in use is supported by the seat pads 20 and none (or at most substantially none) of the rider's weight is supported by the other parts of the seat cushion 16 which interconnect the seat pads 20, in particular the parts of the seat cushion 16 underlying the rider's perineum.

The seat pads 20 are mirror-images of each other but are otherwise identically formed. Notwithstanding that the seat pads 20 in this embodiment are integrally formed with the remainder of the seat cushion 16, they have a detailed and identifiable structure as seen in the other drawings.

As best seen in the cross-sectional views of Figs. 3 and 4, the seat pads 20 are generally hollow.

As also best seen in Figs. 3 and 4, each of the seat pads 20 is a hollow pad with an open bottom. Each seat pad 20 has a substantially flat top wall 24 which provides a platform upon which the rider sits, although it will be understood that in use the rider's weight deforms the flat top wall 24 somewhat.

The centres of the seat pads 20 are separated by a distance S (Fig.5). The distance S in this embodiment is 13cm which is chosen because this is the (approximate) separation of the sit bones of a large range of adults. In particular, a bicycle seat 10 with the structure shown in the drawings can accommodate a rider whose sit bones are spaced apart by a distance ranging from approx. 11 cm to approx. 15 cm, which range is believed to include a large majority of adults. In other embodiments the separation of the centres can be smaller or larger than 13 cm if desired whereby to suit a child or a very large adult.

It will nevertheless be seen that the seat pads 20 taper towards the front of the seat 10. The (longitudinal) centrelines of each seat pad 20 therefore also converge towards the front of the seat whereby the centrelines of the seat pads are closer together at the front of the seat than at the back of the seat. It will be understood that as a rider leans forward whilst riding their weight will move towards the front of the seat 10. This movement of the rider's weight is accompanied by a reduction in the separation of the lowest parts of the sit bones (caused by the structure of the pelvis); arranging the centrelines of the seat pads to be closer together at the front of the seat enables the rider's sit bones to remain located at the approximate (longitudinal) centres of the seat pads for a range of riding positions.

Each of the seat pads 20 has a peripheral wall 22. The peripheral wall 22 is continuous and annular and defines the outer edge of the seat pad 20. The top wall 24 and the peripheral wall 22 are integrally formed and in this embodiment have a common wall thickness.

It will be seen from Fig. 3 that there are no steps, sharp corners or other discontinuities in or between the peripheral wall 22 and the top wall 24. On the contrary, the top wall 24 is a continuation of the peripheral wall 22 and there is no demarcation between the top wall 24 and the peripheral wall 22. It is therefore not possible to define precisely where the top wall 24 ends and the peripheral wall 22 begins (and vice versa) but that is incidental to the invention.

Fig.3 also shows the frame plate 26 which lies underneath the seat pad 20. The frame plate 26 is substantially rigid and is securely mounted to the remainder of the seat frame 12. The peripheral wall 22 of the seat pad 20 lies upon and is bonded to the frame plate 26.

Fig.3 also shows the two holes 28, one of which is located underneath each of the seat pads 20, and specifically inside the region bordered by the bottom edge of the peripheral wall. The holes 28 allow air to escape (and enter) as the seat pads 20 are deformed. In this embodiment the holes 28 are 10 mm in diameter.

It will be seen from Fig.3 that a single frame plate 26 spans the bicycle seat and is engaged by both of the seat pads 20. In another embodiment there are two frame plates, one for each seat pad.

Each of the top wall 24 and the peripheral wall 22 is flexible and resilient; these parts are designed to deform when a rider sits upon the bicycle seat 10.The degree of deformation of each part of the seat pad 20 will depend upon the effective weight which is applied to the seat pad, but it is nevertheless arranged that the top wall 24 deforms to a greater extent than the peripheral wall 22.

In use, the rider's sit bone will ideally rest at the approximate centre of the top wall 24, both longitudinally and laterally (i.e. approximately midway between the inner edge 30 and the outer edge 32, and approximately midway between the front edge 34 and the back edge 36, of the seat pad 10). The rider's sit bone will therefore rest upon a part of the top wall 24 which is surrounded by the peripheral wall 22.

Because the top wall 24 is oriented substantially perpendicular to the weight of the rider, the top wall 24 deforms to a greater extent than the peripheral wall 22. In use therefore, the rider's sit bone is located in a depression or well of the top wall, which depression or well is surrounded by the peripheral wall. This arrangement has been found to provide a relatively stable location for the rider's sit bones during pedalling and manoeuvring.

In this preferred embodiment the seat pad 20 comprises an integrated structure with the top wall 24 and peripheral wall 22 made as a one-piece moulding of silicone vulcanised rubber with a Shore hardness of 25.

It will be seen from Figs. 3 and 4 that the thickness of the peripheral wall 22 is consistent throughout most of its circumference. Nevertheless, a small part 40 of the peripheral wall is made thicker because at the front of the seat pads the peripheral wall is blended into the interconnecting parts 42 which provide the remainder of the seat cushion 16. The locally thickened part of the peripheral wall is relatively small and its effect upon the flexibility of the peripheral wall is minimised.

It has in particular been found that the seat pad structure shown in the drawings, when made of the described material, can deform rapidly, and that the deformation can increase and decrease sufficiently quickly to match rapid changes in the rider's effective weight as the bicycle passes over bumps. The seat pads 20 can thereby support the rider's weight entirely upon the sit bones and can deform according to the effective weight of the rider whereby to be comfortable for extended periods of time.

## Claims

1. A bicycle seat having a seat frame and a seat cushion, the seat cushion having two seat pads and a gap between the pads, each seat pad comprising a flexible and resilient body which is generally hollow.

2. A bicycle seat according to claim 1 in which the seat pads each have a substantially flat top wall.

3. A bicycle seat according to claim 1 or claim 2 in which the seat pads are separated by a distance configured to support a rider's ischial tuberosities.

4. A bicycle seat according to any one of claims 1-3 in which the thickness of the top wall is substantially uniform.

5. A bicycle seat according to any one of claims 1-4 in which the body of each seat pad comprises a top wall and a peripheral wall.

6. A bicycle seat according to claim 5 in which the peripheral wall is continuous.

7. A bicycle seat according to any one of claims 5-7 in which the top wall and the peripheral wall are integrally formed, and are made of the same material.

8. A bicycle seat according to claim 7 in which each seat pad is made as a one-piece moulding.

9. A bicycle seat according to claim 8 in which the seat cushion also has interconnecting parts, and in which each the seat pads and interconnecting parts are made as a one-piece moulding.

10. A bicycle seat according to any one of claims 5-9 in which the thickness of the peripheral wall is substantially uniform.

11. A bicycle seat according to claim 10 in which the thickness of the peripheral wall is at least as large as the thickness of the top wall.

12. A bicycle seat according to claim 11 in which the thickness of the peripheral wall is the same as the thickness of the top wall.

13. A bicycle seat according to any one of claims 1-12 in which the bicycle seat has a frame plate underneath the seat pad, the seat pad having a bottom edge which is adhered to the frame plate.

14. A bicycle seat according to claim 13 in which the frame plate is substantially rigid and has an air hole for the seat pad.

15. A bicycle seat according to any one of claims 1-14 in which the seat pads are made of silicone vulcanised rubber with a Shore hardness of 25.
